# EUROPEAN PATENT SPECIFICATION

(11) **EP 4 230 459 B1**
(45) Date of publication and mention of the grant of the patent: **19.08.2026**
(21) Application number: 23157235.5
(22) Date of filing: 17.02.2023
(51) Int. Cl.: B60K 15/03, B60K 15/067, B64D 37/06, F16L 5/00, F02M 37/10

(54) **LEAK-PROOF FUEL TANK AND AN UNMANNED AERIAL VEHICLE**
AUSLAUFSICHERER KRAFTSTOFFTANK UND UNBEMANNTES FLUGZEUG
RÉSERVOIR DE CARBURANT ÉTANCHE ET VÉHICULE AÉRIEN SANS PILOTE

(30) Priority: 17.02.2022 CN 202220317840 U
(43) Date of publication of application: 23.08.2023
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- EP-A1- 2 230 396
- JP-A- 2012 219 726
- TW-A- 200 513 589
- US-A1- 2022 009 344
- US-B1- 6 189 716

## Description

### FIELD OF THE DISCLOSURE

The invention relates to the technical field of fuel tank, in particular to a leak-proof fuel tank and an unmanned aerial vehicle.

### BACKGROUND OF THE INVENTION

Unmanned aerial vehicle (UAV) is an unmanned flying device controlled by radio remote control equipment and self-contained program control device. UAV is mainly divided into all-electric UAV, fuel-powered UAV and hybrid UAV according to the power system. Among them, since large UAVs need to fly for a long time and have a large load capacity, large UAVs generally use fuel-powered UAVs or hybrid UAVs.

The fuel tank is a device for storing the fuel used by the UAV. Whether the fuel tank is designed properly will directly affect the normal operation of the UAV engine. The fuel pump in the prior art is installed in the fuel tank, but due to the uncertainty of the flight trajectory of the UAV, the fuel in the fuel tank may get contact with the mounting opening of the fuel pump, resulting in fuel leakage, which will affect the flight safety of the UAV. TW 200 513 589 A relates to partially inserting a fuel pump housing into an opening of a fuel tank, wherein a flange portion of the fuel pump housing shall perform the sealing function, such that the fuel pump housing shall ensure a predetermined sealing effect. JP 2012 219726 A relates to a fuel pump mounting structure for mounting it on a fuel tank. EP 2 230 396 A1 relates to a fuel supply module to be mounted on a ceiling wall of a fuel tank, wherein the fuel supply module comprises a mounting base. US 6 189 716 B1 relates to a seal assembly for a fuel tank in a vehicle that shall additionally meet zero evaporative emissions.

### SUMMARY OF THE INVENTION

The purpose of the invention is to provide a leak-proof fuel tank and an unmanned aerial vehicle to solve the situation in the prior art that the fuel in the fuel tank gets into contact with the mounting opening of the fuel pump, and then fuel leakage occurs, which affects the flight safety of the unmanned aerial vehicle.

For this purpose, the first aspect of the invention provides a leak-proof fuel tank, having the features defined in claim 1.

The second aspect of the invention provides an unmanned aerial vehicle, which includes the described leak-proof fuel tank.

Further preferred embodiments are provided in the dependent claims.

The leak-proof fuel tank comprises a tank body and a fuel tank cover. The upper surface of the tank body is depressed downward to form a sealing groove, and the bottom of the sealing groove is provided with a mounting opening in vertical direction, and then the fuel tank cover can be installed on the mounting opening to seal the mounting opening to prevent external water vapor, impurities and other substances from entering the tank body and polluting the fuel in the tank. Wherein the fuel tank cover comprises an inner cover, a first flange cover and a first sealing part and a second sealing part, the inner cover is arranged in the mounting opening, and the inner cover can preliminarily seal the mounting opening. The first flange cover is arranged on the inner cover, and the first sealing part is sleeved on the inner cover in vertical direction, so that the first flange cover can press the first sealing part into the sealing groove, and then the first sealing part can seal the gap between the first flange cover and the bottom of the sealing groove. The above-mentioned inner cover and the first sealing part can perform a secondary seal between the fuel tank cover and the tank body, which enhances the sealing performance between the fuel tank cover and the tank body, prevents fuel from leaking from the mounting opening to the outside, and improves the safety of the device with a leak-proof fuel tank.

### BRIEF DESCRIPTION OF DRAWINGS

Figure 1 shows the sectional view of the leak-proof fuel tank provided by the embodiment of the present invention;
Figure 2 shows the partial enlarged view of A in Figure 1;
Figure 3 shows the structure diagram of the leak-proof fuel tank provided by the embodiment of the present invention;
Figure 4 shows the structure diagram of the leak-proof fuel tank provided by the embodiment of the present invention without the fuel tank cover;
Figure 5 shows the sectional view of the leak-proof fuel tank provided by the embodiment of the present invention in another direction.

In figure:
1 tank body; 11 sealing groove; 12 mounting opening; 13 air inlet; 14 mounting foot; 2 fuel tank cover; 21 inner cover; 22 first flange cover; 221 receiving groove; 23 first sealing part; 24 second sealing part; 25 second flange cover; 3 fuel pipe; 4 fuel pump.

### DETAILED DESCRIPTION

In the description of the present invention, it should be noted that the terms "center", "upper", "lower", "left", "right", "vertical", "horizontal", "inner", "outer" The orientation or positional relationship indicated by etc. is based on the orientation or positional relationship shown in the drawings, which is only for the convenience of describing the invention and simplifying the description, rather than indicating or implying that the device or element referred to must have a specific orientation, use a specific The azimuth structure and operation, therefore cannot be construed as the limitation of the present invention. In addition, the terms "first" and "second" are used for descriptive purposes only and should not be construed as indicating or implying relative importance. Wherein, the terms "first position" and "second position" are two different positions, and "above", "above" and "above" the first feature on the second feature include that the first feature is on the second feature. Directly above and obliquely above, or simply means that the first feature level is higher than the second feature. "Below", "beneath" and "under" the first feature to the second feature include that the first feature is directly below and obliquely below the second feature, or simply means that the first feature has a lower level than the second feature.

In the description of the present invention, it should be noted that, unless otherwise clearly stipulated and limited, the terms "installation", "connection" and "connection" should be understood in a broad sense, for example, it can be a fixed connection or a flexible connection. Detachable connection, or integral connection; it can be mechanical connection or electrical connection; it can be direct connection or indirect connection through an intermediary, and it can be the internal communication of two components. Those of ordinary skill in the art can understand the specific meanings of the above terms in the present invention in specific situations.

Embodiments of the present invention are described in detail below, examples of which are shown in the drawings, wherein the same or similar reference numerals represent the same or similar elements or elements having the same or similar functions throughout. The embodiments described below with reference to the accompanying drawings are exemplary and are only used to explain the present invention, but should not be construed as limiting the present invention.

This embodiment provides a leak-proof fuel tank for storing fuel, and the leak-proof fuel tank is suitable for large unmanned aerial vehicle. Of course, the leak-proof fuel tank is also applicable to other device, which is not specifically limited in this embodiment.

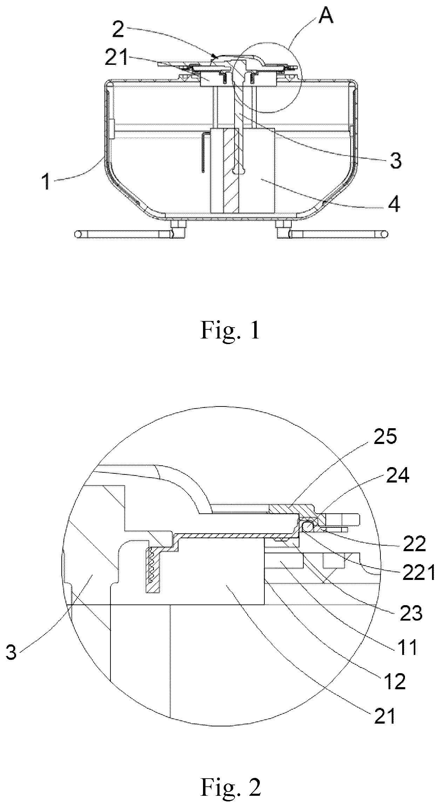

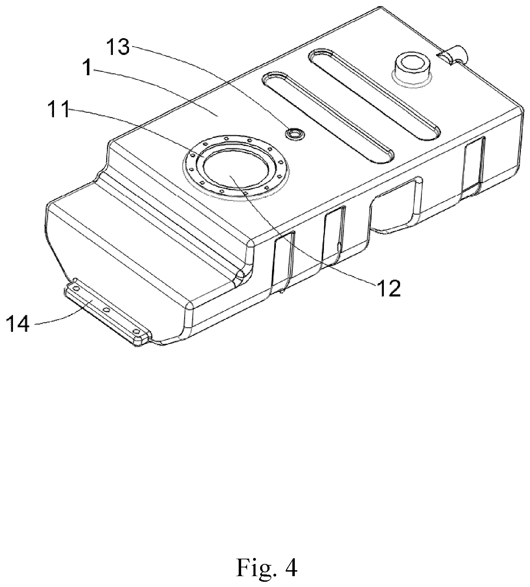

As shown in FIGS. 1-5, the leak-proof fuel tank includes a tank body 1 and a fuel tank cover 2 . The upper surface of the tank body 1 is depressed downward to form a sealing groove 11, and the bottom of the sealing groove 11 is provided with an mounting opening 12 in vertical direction, and then the fuel tank cover 2 can be installed on the mounting opening 12 to seal the mounting opening 12 to prevent external water vapor, impurities and other substances from entering the tank body 1 and polluting the fuel in the tank body 1. Wherein, the fuel tank cover 2 includes an inner cover 21, a first flange cover 22 and a first sealing part 23, the inner cover 21 is arranged in the mounting opening 12, and the sidewall of the inner cover 21 leans close against to the sidewall of the mounting opening 12, and then the inner cover 21 can preliminarily seal the mounting opening 12. The first flange cover 22 is covered on the inner cover 21, and the first sealing part 23 is sleeved on the inner cover 21 in vertical direction, so that the first flange cover 22 can press the first sealing part 23 into the sealing groove 11, and then the first sealing part 23 can seal the gap between the first flange cover 22 and the bottom of the sealing groove 11. The above-mentioned inner cover 21 and the first sealing part 23 can perform a secondary seal between the fuel tank cover 2 and the tank body 1, enhances the sealing performance between the fuel tank cover 2 and the tank body 1, and prevents fuel from leaking from the mounting opening 12 to the outside, and improves the safety of the device with a leak-proof fuel tank.

Wherein, the leak-proof fuel tank also includes a second sealing part 24, the lower surface of the first flange cover 22 is recessed upwards to form a receiving groove 221, the second sealing part 24 is arranged in the receiving groove 221, and the second sealing part 24 presses against the top of the wall of the sealing groove 11, the second sealing part 24 can seal the gap between the first flange cover 22 and the top of the wall of the sealing groove 11. The above mentioned inner cover 21, the first sealing part 23 and the second sealing part 24 can ensure a tertiary seal between the fuel tank cover 2 and the tank body 1, and further enhance the sealing performance between the fuel tank cover 2 and the tank body 1.

Optionally, both the first sealing part 23 and the second sealing part 24 are rubber parts, and after the first flange cover 22 is pressed down, the first sealing part 23, the second sealing part 24, the first flange cover 22 and the sealing groove 11 can form a closed space between the four, the gas in the closed space can resist the substances outside the closed space, so as to prevent the external gas, impurities and other substances from entering the tank body 1 from the mounting opening 12, and prevent the fuel in the tank body 1 from leaking from the mounting opening 12 to the outside of the tank body 1.

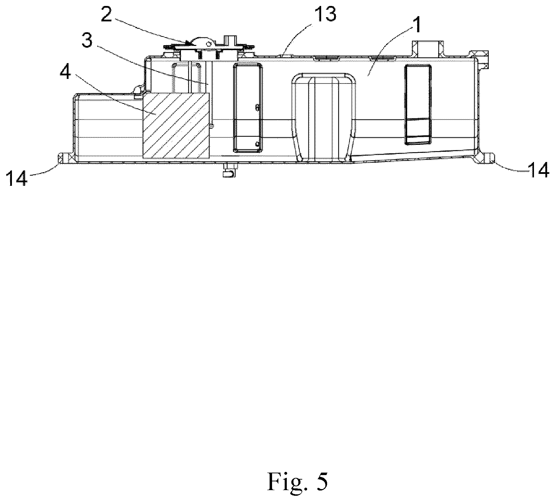

As shown in Figures 1 and 5, the leak-proof fuel tank also includes a fuel pipe 3, which passes through the first flange cover 22 and the inner cover 21 in sequence in vertical direction, so that the fuel pipe 3 can connect the inside and outside of the tank body 1 on both sides, so that the fuel in the tank body 1 can flow into the outside through the fuel pipe 3. Optionally, the fuel pipe 3 is threadedly connected to the first flange cover 22, and the inner cover 21 can cover the fuel pipe 3 and the first flange cover 22 at the lower end of the first flange cover 22, and then the inner cover 21 can seal the thread gap between the fuel pipe 3 and the first flange cover 22 ^{,} and improves the sealing performance of the fuel tank cover 2 itself.

Wherein, the leak-proof fuel tank also includes a fuel pump 4, the fuel pump 4 is arranged in the tank body 1, and the fuel pump 4 is connected to one end of the fuel pipe 3, and then the fuel in the tank body 1 can be pumped out from the fuel pipe 3 to the device through the fuel pump 4, to achieve the flow and use of the fuel. Optionally, the bottom of the tank body 1 is obliquely disposed, and the fuel pump 4 is arranged at the lowest end inside the tank body 1, so that the fuel can flow into the fuel inlet of the fuel pump 4, so as to avoid fuel accumulation on the side away from the fuel pump 4 in the tank body 1, the fuel can also be pumped into fuel pipe 3 when the fuel level is low.

Further, the fuel tank also includes a second flange cover 25, and the second flange cover 25 is covered on the first flange cover 22 for sealing the fuel pipe 3 in the space formed by the first flange cover 22 and the second flange cover 25, the part of the fuel pipe 3 above the first flange cover 22 is further sealed to enhance the sealing performance of the fuel tank cover 2; wherein, the wire harness component of the fuel pump 4 can also be set in the space formed by the first flange cover 22 and the second flange cover 25. Specifically, the second flange cover 25 includes a top cover and a flange plate, the flange plate is arranged on the top cover, and the flange plate and the top cover are sealed and connected. Optionally, the leak-proof fuel tank also includes a connecting part, which passes through the second flange cover 25 and the first flange cover 22 successively in vertical direction, and so as to install the second flange cover 25 and the first flange cover 22 on the tank body 1 to ensure the stability of the fuel tank cover 2 after being installed on the tank body 1. Further optionally, the connecting part is a bolt-type, so that the staff can easily install and disassemble the fuel tank cover 2 and the tank body 1 through the bolt-type connecting part.

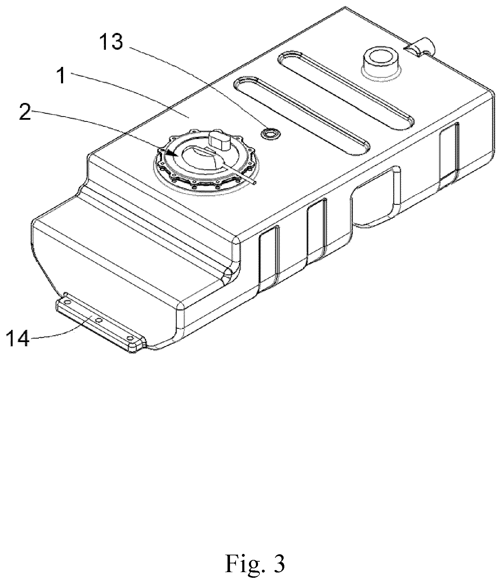

As shown in Figures 3 to 5, the leak-proof fuel tank also includes a one-way air check valve, and the tank body 1 is provided with an air inlet 13, and the one-way air check valve is installed on the tank body 1 through the air inlet 13, wherein, The one-way air check valve can allow the outside air to enter the tank body 1, and after the fuel in the tank body 1 is used, the outside air can enter the tank body 1 through the one-way air check valve, so as to ensure that the air pressure of inside and outside of the tank body 1 is the same and prevent the fuel in the tank body 1 from flowing out to the outside after the air pressure in the tank body 1 becomes smaller, and at the same time prevent the external atmospheric pressure from squeezing the tank body 1 and causing damage to the tank body 1.

Further, one end of the tank body 1 extends horizontally to form a mounting foot 14, which is used to install the tank body 1 on the device, and then the entire leak-proof tank can be installed on the device through the mounting foot 14. At the same time, the mounting foot 14 is integrally formed with the tank body 1, and the mounting foot 14 is provided with a receiving groove 221, and the fuel storage space of the tank body 1 can be increased through the mounting foot 14, so that the mounting foot 14 can be fully utilized. Specifically, the mounting foot 14 is provided with pre-embedded part, and the lower end of the pre-embedded part is provided with internal threaded holes, and the bolts can be threadedly connected with the pre-embedded part through the internal threaded hole, so that the leak-proof fuel tank can be installed on large unmanned aerial vehicles through bolts. Among them, the internal threaded holes at the lower end of the pre-embedded part can facilitate the installation of bolts from the bottom to the top of the leak-proof tank, which is suitable for installing the leak-proof tank on large UAVs.

This embodiment also provides an unmanned aerial vehicle, which includes the above-mentioned leak-proof fuel tank; the unmanned aerial vehicle further includes an unmanned aerial vehicle body. The leak-proof fuel tank is installed on the unmanned aerial vehicle body. Thus, the UAV with the fuel tank can have a good leak-proof function, so that when the UAV bumps or deflects during flight, the fuel in the fuel tank could not leak from the mounting opening of the fuel pump, thereby improving the flight safety of the unmanned aerial vehicle.

The above embodiments are merely illustrative of the principles of the present invention and its effects, which is not intended to limit the invention, as defined by the claims.

## Claims

1. A leak-proof fuel tank, the leak-proof fuel tank comprising:
a tank body (1), wherein an upper surface of the tank body (1) is depressed downward to form a sealing groove (11) and a bottom of the sealing groove (11) is provided with a mounting opening (12) in a vertical direction; and
a fuel tank cover (2) provided with an inner cover (21), a first flange cover (22) and a first sealing part (23);
wherein the inner cover (21) is arranged in the mounting opening (12) and a sidewall of the inner cover (21) leans close against to a sidewall of the mounting opening (12), whereby the inner cover (21) preliminarily seals the mounting opening (12);
wherein the first flange cover (22) is set on the inner cover (21);
wherein the first sealing part (23) is vertically sleeved on the inner cover (21) so that the first flange cover (22) presses the first sealing part (23) into the sealing groove (11);
wherein the leak-proof fuel tank is further comprising a second sealing part (24);
wherein a lower surface of the first flange cover (22) is recessed upwards to form a receiving groove (221), and wherein the second sealing part (24) is arranged in the receiving groove (221), and wherein the second sealing part (24) presses against a top of a wall of the sealing groove (11).

2. The leak-proof fuel tank according to claim 1 further comprising a fuel pipe (3) wherein the fuel pipe (3) passes through the first flange cover (22) and the inner cover (21) successively in the vertical direction; the inner cover (21) covers the fuel pipe (3) and the first flange cover (22) at the lower end of the first flange cover (22).

3. The leak-proof fuel tank according to claim 2, wherein the fuel tank cover (2) further comprises a second flange cover (25), wherein the second flange cover (25) is arranged on the first flange cover (22) so as to seal the fuel pipe (3) in a space formed by the first flange cover (22) and the second flange cover (25).

4. The leak-proof fuel tank according to claim 3 further comprising a connecting part, the connecting part passes through the second flange cover (25) and the first flange cover (22) successively in the vertical direction, so as to install the second flange cover (25) and the first flange cover (22) on the tank body (1).

5. The leak-proof fuel tank according to claim 2 further comprising a fuel pump (4), wherein the fuel pump (4) is arranged in the tank body (1); wherein the fuel pump (4) is connected to one end of the fuel pipe (3).

6. The leak-proof fuel tank according to claim 5, wherein a bottom of the tank body (1) is obliquely disposed, and the fuel pump (4) is located at the lowest end inside the tank body (1), and wherein the fuel is configured to flow into a fuel inlet of the fuel pump (4).

7. The leak-proof fuel tank according to claim 1 further comprising a one-way air check valve, wherein the tank body (1) is provided with an air inlet (13), and the one-way air check valve is installed on the tank body (1) through the air inlet (13); wherein the one-way air check valve can allow the outside air to enter the tank body (1).

8. The leak-proof fuel tank according to claim 1, wherein the end of the tank body (1) extends horizontally to form a mounting foot (14) and the mounting foot (14) is used to install the tank body (1) on a device; the mounting foot (14) is provided with a pre-embedded part, and a lower end of the pre-embedded part is provided with an internal thread hole.

9. An unmanned aerial vehicle, which is **characterized in that** it includes the leak-proof fuel tank described in any one of the above claims 1-8.

## Patentansprüche

1. Lecksicherer Kraftstofftank, wobei der lecksichere Kraftstofftank umfasst:
einen Tankkörper (1), wobei eine obere Fläche des Tankkörpers (1) nach unten vertieft ist, um eine Dichtungsnut (11) zu bilden, und ein Boden der Dichtungsnut (11) mit einer Montageöffnung (12) in einer vertikalen Richtung versehen ist; und
eine Kraftstofftankabdeckung (2), die mit einer inneren Abdeckung (21), einer ersten Flanschabdeckung (22) und einem ersten Dichtungsteil (23) versehen ist;
wobei die innere Abdeckung (21) in der Montageöffnung (12) angeordnet ist und eine Seitenwand der inneren Abdeckung (21) eng gegen eine Seitenwand der Montageöffnung (12) lehnt, wodurch die innere Abdeckung (21) die Montageöffnung (12) vorläufig abdichtet;
wobei die erste Flanschabdeckung (22) auf die innere Abdeckung (21) aufgesetzt ist;
wobei das erste Dichtungsteil (23) vertikal auf die innere Abdeckung (21) aufgeschoben ist, so dass die erste Flanschabdeckung (22) das erste Dichtungsteil (23) in die Dichtungsnut (11) drückt;
wobei der lecksichere Kraftstofftank ferner ein zweites Dichtungsteil (24) umfasst;
wobei eine untere Fläche der ersten Flanschabdeckung (22) nach oben vertieft ist, um eine Aufnahmenut (221) zu bilden, und wobei das zweite Dichtungsteil (24) in der Aufnahmenut (221) angeordnet ist, und wobei das zweite Dichtungsteil (24) gegen eine Oberseite einer Wand der Dichtungsnut (11) drückt.

2. Lecksicherer Kraftstofftank nach Anspruch 1, ferner umfassend ein Kraftstoffrohr (3), wobei das Kraftstoffrohr (3) nacheinander in der vertikalen Richtung durch die erste Flanschabdeckung (22) und die innere Abdeckung (21) verläuft; wobei die innere Abdeckung (21) das Kraftstoffrohr (3) und die erste Flanschabdeckung (22) am unteren Ende der ersten Flanschabdeckung (22) abdeckt.

3. Lecksicherer Kraftstofftank nach Anspruch 2, wobei die Kraftstofftankabdeckung (2) ferner eine zweite Flanschabdeckung (25) umfasst, wobei die zweite Flanschabdeckung (25) auf der ersten Flanschabdeckung (22) angeordnet ist, um das Kraftstoffrohr (3) in einem durch die erste Flanschabdeckung (22) und die zweite Flanschabdeckung (25) gebildeten Raum abzudichten.

4. Lecksicherer Kraftstofftank nach Anspruch 3, ferner umfassend ein Verbindungsteil, wobei das Verbindungsteil nacheinander in der vertikalen Richtung durch die zweite Flanschabdeckung (25) und die erste Flanschabdeckung (22) verläuft, um die zweite Flanschabdeckung (25) und die erste Flanschabdeckung (22) auf dem Tankkörper (1) zu installieren.

5. Lecksicherer Kraftstofftank nach Anspruch 2, ferner umfassend eine Kraftstoffpumpe (4), wobei die Kraftstoffpumpe (4) im Tankkörper (1) angeordnet ist; wobei die Kraftstoffpumpe (4) mit einem Ende des Kraftstoffrohrs (3) verbunden ist.

6. Lecksicherer Kraftstofftank nach Anspruch 5, wobei ein Boden des Tankkörpers (1) schräg angeordnet ist und die Kraftstoffpumpe (4) am untersten Ende im Tankkörper (1) angeordnet ist, und wobei der Kraftstoff so konfiguriert ist, dass er in einen Kraftstoffeinlass der Kraftstoffpumpe (4) strömt.

7. Lecksicherer Kraftstofftank nach Anspruch 1, ferner umfassend ein Einweg-Luftrückschlagventil, wobei der Tankkörper (1) mit einem Lufteinlass (13) versehen ist und das Einweg-Luftrückschlagventil am Tankkörper (1) durch den Lufteinlass (13) installiert ist; wobei das Einweg-Luftrückschlagventil es der Außenluft ermöglichen kann, in den Tankkörper (1) einzutreten.

8. Lecksicherer Kraftstofftank nach Anspruch 1, wobei sich das Ende des Tankkörpers (1) horizontal erstreckt, um einen Montagefuß (14) zu bilden, und der Montagefuß (14) verwendet wird, um den Tankkörper (1) auf einer Vorrichtung zu installieren; wobei der Montagefuß (14) mit einem voreingebetteten Teil versehen ist und ein unteres Ende des voreingebetteten Teils mit einem Innengewindeloch versehen ist.

9. Unbemanntes Luftfahrzeug, das **dadurch gekennzeichnet ist, dass** es den in einem der obigen Ansprüche 1-8 beschriebenen lecksicheren Kraftstofftank umfasst.

## Revendications

1. Réservoir de carburant étanche aux fuites, le réservoir de carburant étanche aux fuites comprenant:
un corps de réservoir (1), dans lequel une surface supérieure du corps de réservoir (1) est enfoncée vers le bas pour former une rainure d'étanchéité (11) et un fond de la rainure d'étanchéité (11) est pourvu d'une ouverture de montage (12) dans une direction verticale; et
un couvercle de réservoir de carburant (2) pourvu d'un couvercle interne (21), d'un premier couvercle de bride (22) et d'une première partie d'étanchéité (23);
dans lequel le couvercle interne (21) est agencé dans l'ouverture de montage (12) et une paroi latérale du couvercle interne (21) s'appuie étroitement contre une paroi latérale de l'ouverture de montage (12), moyennant quoi le couvercle interne (21) scelle au préalable l'ouverture de montage (12);
dans lequel le premier couvercle de bride (22) est placé sur le couvercle interne (21);
dans lequel la première partie d'étanchéité (23) est emmanchée verticalement sur le couvercle interne (21) de sorte que le premier couvercle de bride (22) presse la première partie d'étanchéité (23) dans la rainure d'étanchéité (11);
dans lequel le réservoir de carburant étanche aux fuites comprend en outre une seconde partie d'étanchéité (24);
dans lequel une surface inférieure du premier couvercle de bride (22) est évidée vers le haut pour former une rainure de réception (221), et dans lequel la seconde partie d'étanchéité (24) est agencée dans la rainure de réception (221), et dans lequel la seconde partie d'étanchéité (24) presse contre une partie supérieure d'une paroi de la rainure d'étanchéité (11).

2. Réservoir de carburant étanche aux fuites selon la revendication 1, comprenant en outre un tuyau de carburant (3) dans lequel le tuyau de carburant (3) passe à travers le premier couvercle de bride (22) et le couvercle interne (21) successivement dans la direction verticale; le couvercle interne (21) recouvre le tuyau de carburant (3) et le premier couvercle de bride (22) au niveau de l'extrémité inférieure du premier couvercle de bride (22).

3. Réservoir de carburant étanche aux fuites selon la revendication 2, dans lequel le couvercle de réservoir de carburant (2) comprend en outre un second couvercle de bride (25), dans lequel le second couvercle de bride (25) est agencé sur le premier couvercle de bride (22) de manière à sceller le tuyau de carburant (3) dans un espace formé par le premier couvercle de bride (22) et le second couvercle de bride (25).

4. Réservoir de carburant étanche aux fuites selon la revendication 3, comprenant en outre une partie de raccordement, la partie de raccordement passe à travers le second couvercle de bride (25) et le premier couvercle de bride (22) successivement dans la direction verticale, de manière à installer le second couvercle de bride (25) et le premier couvercle de bride (22) sur le corps de réservoir (1).

5. Réservoir de carburant étanche aux fuites selon la revendication 2, comprenant en outre une pompe à carburant (4), dans lequel la pompe à carburant (4) est agencée dans le corps de réservoir (1); dans lequel la pompe à carburant (4) est raccordée à une extrémité du tuyau de carburant (3).

6. Réservoir de carburant étanche aux fuites selon la revendication 5, dans lequel un fond du corps de réservoir (1) est disposé de manière oblique, et la pompe à carburant (4) est située au niveau de l'extrémité la plus basse à l'intérieur du corps de réservoir (1), et dans lequel le carburant est configuré pour s'écouler dans une entrée de carburant de la pompe à carburant (4).

7. Réservoir de carburant étanche aux fuites selon la revendication 1, comprenant en outre un clapet anti-retour d'air unidirectionnel, dans lequel le corps de réservoir (1) est pourvu d'une entrée d'air (13), et le clapet anti-retour d'air unidirectionnel est installé sur le corps de réservoir (1) à travers l'entrée d'air (13); dans lequel le clapet anti-retour d'air unidirectionnel peut permettre à l'air extérieur d'entrer dans le corps de réservoir (1).

8. Réservoir de carburant étanche aux fuites selon la revendication 1, dans lequel l'extrémité du corps de réservoir (1) s'étend horizontalement pour former un pied de montage (14) et le pied de montage (14) est utilisé pour installer le corps de réservoir (1) sur un dispositif; le pied de montage (14) est pourvu d'une partie pré-encastrée, et une extrémité inférieure de la partie pré-encastrée est pourvue d'un trou de filetage interne.

9. Véhicule aérien sans pilote, qui est **caractérisé en ce qu'**il comprend le réservoir de carburant étanche aux fuites décrit dans l'une quelconque des revendications 1 à 8 ci-dessus.
